# EUROPÄISCHE PATENTSCHRIFT

(11) **EP 3 447 403 B1**
(45) Veröffentlichungstag und Bekanntmachung des Hinweises auf die Patenterteilung: **09.06.2021**
(21) Anmeldenummer: 17192879.9
(22) Anmeldetag: 25.09.2017
(51) Int. Cl.: F24H 4/02, F24D 3/18, F24D 12/02, F24D 19/10

(54) **BETRIEBSVERFAHREN FÜR WÄRMEGEWINNUNGSANLAGEN, LUFT/FLÜSSIGKEIT-WÄRMETAUSCHEREINHEIT UND WÄRMEGEWINNUNGSANLAGE**
OPERATING METHOD FOR HEAT GENERATION INSTALLATIONS, AIR/LIQUID HEAT EXCHANGER UNIT AND HEAT GENERATION INSTALLATION
PROCÉDURES DE FONCTIONNEMENT POUR INSTALLATIONS DE RÉCUPÉRATION DE CHALEUR, UNITÉ D'ÉCHANGE DE CHALEUR AIR/FLUIDE ET INSTALLATION DE RÉCUPÉRATION DE CHALEUR

(30) Priorität: 25.08.2017 DE 202017105111 U
(43) Veröffentlichungstag der Anmeldung: 27.02.2019
(73) Patentinhaber: ATF Anwendungszentrum für Technik und Forschung UG (haftungsbeschränkt), 73779 Deizisau (DE)
(72) Erfinder: Saier, Frank, 72581 Dettingen an der Erms (DE); Leßmann, Ingo, 73240 Wendlingen (DE)
(74) Vertreter: Klocke, Peter

(56) Entgegenhaltungen:
- EP-A1- 2 287 547
- EP-A1- 2 322 880
- DE-A1- 3 004 062
- DE-A1-102007 050 446
- JP-A- 2006 284 022

## Beschreibung

Die vorliegende Erfindung betrifft ein Betriebsverfahren für Wärmegewinnungsanlagen, die in einem Flüssigkeitskreislauf mindestens eine Erdwärmequelle, eine Wärmepumpe und zusätzlich eine Luft/Flüssigkeit-Wärmetauschereinheit mit mindestens einen Luft/Flüssigkeit-Wärmetauscher aufweisen. Die Erfindung betrifft außerdem eine Luft/Flüssigkeit-Wärmetauschereinheit sowie eine Wärmegewinnungsanlage zur Durchführung des Verfahrens.

Es sind Wärmegewinnungsanlagen bekannt, bei denen eine gebäudeseitig installierte Flüssigkeit/Wasser-Wärmepumpe über mindestens einer Erdwärmequelle die aus der Erde gewonnene Wärme zugeführt wird. Unter einer Erdwärmequelle werden Tiefensonden, Erdwärmekörbe oder auch Flächenkollektoren verstanden. Grundsätzlich kann es sich bei der Transportflüssigkeit für Wärme um eine übliche Transportflüssigkeit, wie Sole, Wasser, Wasser mit Salz oder Alkohol handeln. Unter Sole wird üblicherweise ein Wasser-Glykol-Gemisch verstanden. Um den Wirkungsgrad der gebäudeseitigen Wärmepumpe zu verbessern, ist bekannt, zusätzlich einen Luftplattenwärmetauscher vorzusehen, der durch die Steuerung der Wärmepumpe je nach Außentemperatur und aktuellem Wirkungsgrad alternativ zu der Erdwärmequelle an die Wärmepumpe liefert. Zum Stand der Technik wird insbesondere auf die beiden Druckschriften DE 30 04 062 A1 und DE 10 2007 050 446 A1 verwiesen.

Die Offenlegungsschrift DE 30 04 062 A1 lehrt ein Verfahren zur Beheizung von Räumen sowie von Schwimmbädern mittels eines Wärmepumpenprozesses, bei dem Energie aus Sonne und Umwelt mittels Absorber-Fassaden, Absorber-Dächern sowie Kollektoren beliebiger Art gewonnen wird, wobei deren Temperatur unter die Temperatur der Umgebung gesenkt und dabei der Umgebung Wärme entzogen wird und die gewonnene Wärme bei ausreichender Temperatur direkt, sonst nach Erhöhung ihrer Temperatur mittels ein-, oder mehrstufigen Wärmepumpenprozesses zur Heizung genutzt wird, wobei die Überschusswärme durch Wärme beliebiger Herkunft erweitert wird, insbesondere bei niedriger Temperatur durch Wärme die unter der Erdoberfläche besonders bei großen Tiefen im Speichermedium und/oder in der großen Masse des Erdreichs gespeichert ist bzw. wird, und wobei nach Abkühlung des Speichers unter die Temperatur des umgebenden Erdreichs aus der Masse des Erdreiches beträchtliche Mengen an Wärme entzogen werden. Dieser Stand der Technik offenbart zudem ein Heizsystem zur Durchführung des vorstehenden Verfahrens, wobei die gewonnene Wärme bei ausreichender Temperatur der Trägerflüssigkeit direkt an eine Raumheizanlage, einen Warmwasseraufbereiter, sowie an beliebige Wärmeverbraucher weitergeleitet wird und bei nichtausreichender Temperatur diese über eine Wärmepumpe erhöht wird, das zur Speicherung der Überschusswärme sowie der Wärme beliebiger Herkunft Langzeitspeicher unter der Erdoberfläche insbesondere in Tiefbohrungen angeordnet aufweist, wobei für Trägerflüssigkeiten unterschiedlicher chemischer Zusammensetzung und Reinheitsgrades getrennte Kreisläufe vorgesehen sind, und zur Übertragung der Wärme aus den Langzeitspeichern an die Masse des Erdreichs und umgekehrt, die Wände des Speicherbehälters aus wärmeleitendem Material ausgebildet sind. Die gewonnene Wärme wird ist jeweils über die Ventile und Umwälzpumpen zur Heizanlage förderbar.

Die DE 10 2007 050 446 A1 behandelt eine indirekt verdampfende Wärmepumpe, bestehend aus einem Kältemittelkreislauf, einem Wärmeverteilerkreislauf und einem Wärmequellenkreislauf, die über einen verdampfenden Wärmetauscher und einem verflüssigenden Wärmetauscher miteinander gekoppelt sind, wobei der Wärmequellenkreislauf mindestens zwei Wärmekreisläufe mit unterschiedlichen Energiequellen besitzt, die jeweils untereinander und mit dem Kältemittelkreislauf verbindbar sind. Dabei sind die Wärmequellenkreisläufe parallel oder in Reihe schaltbar. Einer der Wärmequellenkreisläufe, vorzugsweise ein Solarwärmekreislauf, besitzt eine erhöhte Temperatur, um die reale Temperatur des aktiven Wärmequellenkreislaufes an die optimale Eingangstemperatur am Kältemittelkreislauf anzupassen, und ist mit einem Überschusswärmekreislauf verbindbar, der mit dem Wärmeverteilerkreislauf oder mit einem externen Verbraucher verbunden ist, wobei die Verbindung der Wärmequellenkreisläufe mit den Solarwärmekreislauf über einen Wärmetauscher, die Verbindung der Wärmequellenkreisläufe untereinander über mindestens ein Wegeventil und die Verbindung des Solarwärmekreislaufes mit dem Überschusswärmekreislauf über mindestens ein weiteres Wegeventil erfolgen. Dieser Stand der Technik beschreibt zudem ein Verfahren zur Optimierung der Eingangstemperatur der indirekt verdampfenden Wärmepumpe, wobei die mindestens zwei Wärmequellenkreisläufe mit unterschiedlichen Energiequellen verwendet werden, die Temperaturen der Energiequellen ermittelt und miteinander und mit anderen Temperaturwerten in der Wärmepumpe verglichen werden und der Wärmequellenkreislauf mit der der optimalen Eingangstemperatur der Wärmepumpe am nächsten kommenden Temperatur ausgewählt und aktiviert wird.

Bei den Erdwärmequellen ist es bekannt, dass durch die dauernde Nutzung das Erdreich auskühlt und damit die aus dem Erdreich gewonnene Wärme insbesondere bei längerem Betrieb nicht mehr die optimale Temperatur aufweist, so dass dies den Wirkungsgrad der angeschlossenen Wärmepumpe erheblich reduziert.

Ein weiteres Problem besteht darin, dass zur Erreichung einer optimalen Temperatur für die aus dem Erdreich gewonnene Wärme eine bestimmte Anzahl von Sonden, Erdwärmekörbe oder Flächenkollektoren vorgesehen sein müssen. Insbesondere bei den Tiefensonden kann dies entweder durch entsprechend tiefe Sonden oder durch eine entsprechende Anzahl von kürzeren Sonden realisiert werden. Tiefensonden bedarf es besonderer Genehmigungen, die teilweise nicht mehr erteilt werden.

Der vorliegenden Erfindung liegt daher die Aufgabe zugrunde eine Möglichkeit vorzuschlagen, mit der die Wärmegewinnung aus Erdwärmequellen verbessert werden kann.

Diese Aufgabe wird erfindungsgemäß durch ein Betriebsverfahren für Wärmegewinnungsanlagen gemäß dem Anspruch 1 sowie durch eine Luft/Flüssigkeit-Wärmetauschereinheit und einer Wärmegewinnungsanlage gemäß den nebengeordneten Ansprüchen gelöst. Weitere vorteilhafte Ausgestaltungen sind den jeweiligen rückbezogenen Unteransprüchen zu entnehmen.

Gemäß dem Betriebsverfahren wird mittels mindestens einem Luft/Flüssigkeit-Wärmetauscher erwärmte Flüssigkeit und wahlweise in einem Ergänzungsmodus der Wärmepumpe oder der mindestens einen Erdwärmequelle oder in einem Regenerationsmodus ausschließlich der mindestens einen Erdwärmequelle zugeführt. Bei dem Luft/Flüssigkeit-Wärmetauscher kann es sich um übliche geeignete Wärmetauscher, beispielsweise Plattenwärmetauscher handeln. Die durch die Temperatur der Umgebungsluft übertragene Wärme auf die durch den Wärmetauscher geführte Flüssigkeit, bei der es sich, wie bereits oben ausgeführt, um Sole (Glykol-Wasser-Gemisch), Wasser und Salz, Wasser mit Alkohol etc. handeln kann, wird in bekannter Art und Weise übertragen. Gemäß dem Verfahren gibt es nun die Möglichkeit, den Luft/Flüssigkeit-Wärmetauscher in die von der Wärmepumpe zu der mindestens einen Erdwärmequelle führenden Zuleitung zu schalten, so dass die über den Luft/Flüssigkeit-Wärmetauscher erwärmte Flüssigkeit über die mindestens eine Erdwärmequelle der gebäudeseitigen Wärmepumpe oder, je nach Situation, die von der mindestens einen Erdwärmequelle kommende Flüssigkeit über den Luft/Flüssigkeit-Wärmetauscher der Wärmepumpe zugeführt wird. Durch diesen bevorzugten Ergänzungsmodus, bei dem die Flüssigkeit zuerst über den Luft/Flüssigkeit-Wärmetauscher geführt wird, wird zum einen verhindert, dass das Erdreich zu sehr auskühlt und sich Vereisungen insbesondere bei den Tiefensonden bilden und zum anderen der, auf eine Erdwärmequelle ausgerichteten gebäudeseitigen Wärmepumpe Flüssigkeit mit höherer Temperatur zugeführt wird. Üblicherweise liefern Erdwärmequellen maximal eine Temperatur von 4° Celsius, so dass durch den zusätzlichen Luft/Flüssigkeit-Wärmetauscher eine Erhöhung stattfindet, die den Wirkungsgrad der gebäudeseitigen Wärmepumpe erheblich verbessert, wenn der Luft/Flüssigkeit-Wärmetauscher strömungsseitig vor der mindestens einen Erdwärmequelle angeordnet ist. Im anderen Fall kann er dazu dienen, auch den Wirkungsgrad der Wärmepumpe zu erhöhen, wobei in diesem Fall die Erwärmung im Erdreich nicht erfolgt.

Wenn von der gebäudeseitigen Wärmepumpe aufgrund entsprechender Außentemperaturen und mangelnden gebäudeseitigen Bedarfs keine Wärmeenergie benötigt wird, wird die Wärmepumpe von der mindestens eine Erdwärmequelle getrennt, so dass die erwärmte Flüssigkeit vom Wärmetauscher der mindestens einen Erdwärmequelle zugeführt wird und von dieser wieder zurück zu dem Wärmetauscher fließt. Hierzu ist eine eigene Umwälzpumpe und eine entsprechende Steuerung vorgesehen, die in Abhängigkeit von den Gegebenheiten den Regenerationsmodus einschaltet bzw. bei Bedarf zu dem Ergänzungsmodus wechselt. Damit wird die über den Wärmetauscher gewonnene Energie dem Erdreich zugeführt, so dass die Erdwärmequellen nach dem Entzug von Wärme regeneriert werden und darüber hinaus, insbesondere im Sommer, Wärme im Erdreich gespeichert wird, die in den Zeiten, in denen geringe Außentemperaturen herrschen, aus dem Erdreich zurückgewonnen werden kann. Mittels eines derartigen Betriebsverfahrens kann somit auf einfache Weise zum Einen eine Wirkungsgradverbesserung bei einer Erdwärmeheizanlage erreicht werden und zum anderen kann zu Zeiten, in denen kein Wärmebedarf besteht, vorhandene Wärmeenergie gespeichert werden, wodurch sich ebenfalls der Wirkungsgrad der Erdwärmeheizanlage verbessert. Dies kann sowohl an einzelnen Tagen in den Übergangszeiten oder im Winter als auch insbesondere im Sommer für die kältere Jahreszeit geschehen.

Gemäß einer weiteren Ausbildung des Verfahrens wird bei Unterschreiten eines vorgebbaren unteren Grenzwertes für die Außenluft am Luft/Flüssigkeit-Wärmetauscher die Flüssigkeit von der Wärmepumpe direkt über die mindestens eine Erdwärmequelle zurück zur Wärmepumpe geführt. Dieser Monomodus ist dann erforderlich, wenn der Wärmetauscher keinen Wärmebeitrag mehr liefert, so dass ausschließlich die aus der Erdwärmequelle gewonnene Energie verwendet wird. Durch die vorstehend beschriebenen Betriebsmodi ist in diesem Fall eine höhere Temperatur der aus dem Erdreich kommenden Flüssigkeit zu erwarten als ohne die zusätzliche Einbringung der Wärme in den wärmeren Umgebungstemperaturphasen.

Die erfindungsgemäße Luft/Flüssigkeit-Wärmetauschereinheit zur Durchführung des Verfahrens mit einem Gehäuse mit Be- und Entlüftungsöffnungen, mindestens einem Luft/Flüssigkeit-Wärmetauscher sowie mindestens einer Vorlauf- und einer Rücklaufleitung weist eine in der mindestens einen Vorlauf- oder Rücklaufleitung über ein Ventil zuschaltbare Umwälzpumpe und eine Regel- und Steuereinrichtung mindestens zum Steuern des Ventils in Abhängigkeit vom Ergänzungs- oder Regenerationsmodus auf. Diese Luft/Flüssigkeit-Wärmetauschereinheit ist ein eigenständiges Modul mit eigener Regel- und Steuereinrichtung, die in geeigneter Art und Weise an den aus der Primärseite der gebäudeseitigen Wärmepumpe und der mindestens einen Erdwärmequelle bestehenden Kreislauf angeschlossen, die dafür vorgesehenen Ventile in Abhängigkeit von vorgebbaren Parametern wie Umgebungslufttemperatur, Temperatur der aus dem Erdreich kommenden Flüssigkeit, optimaler Wirkungsgrad der Wärmepumpe in Abhängigkeit der Temperatur von der Flüssigkeit auf der Primärseite der gebäudeseitigen Wärmepumpe sowie sonstige Einrichtungen regelt und steuert. Die zusätzliche Umwälzpumpe ist für den Regenerationsmodus erforderlich, muss jedoch im Ergänzungsmodus von dem Kreislauf getrennt sein, um nicht mit der gebäudeseitigen Umwälzpumpe für den Kreislauf durch die Wärmepumpe zu kollidieren.

Dabei steuert die Regel- und Steuereinheit mindestens ein Umschaltventil, das die Vorlauf- und/oder Rücklaufleitung mit einem Flüssigkeitskreislauf von der Wärmepumpe zu der mindestens einen Erdwärmequelle verbindet. Je nach Anwendungsfall kann mittels bereits einem, normalerweise externen, Umschaltventil der Regenerationsmodus durchgeführt werden. Hierzu wird die Luft/Flüssigkeit-Wärmetauschereinheit mit ihrer Rücklaufleitung über das Umschaltventil an die Vorlaufleitung zu der mindestens einen Erdwärmequelle angeschlossen. Die Wärmepumpe ist dann von dem Flüssigkeitskreislauf getrennt. Der Rücklauf von der mindestens einen Erdwärmequelle ist mit der Vorlaufleitung verbunden. Wenn keine Regeneration stattfindet, ist die Luft/Flüssigkeit-Wärmetauschereinheit getrennt und die gebäudeseitige Wärmepumpe bezieht ihre primärseitige Energie im Monomodus ausschließlich aus der mindestens einen Energiequelle. Mittels eines weiteren Umschaltventils und entsprechenden Leitungen kann auch der Ergänzungsmodus realisiert werden. In diesem Modus ist die Luft/Flüssigkeit-Wärmetauschereinheit mit der gebäudeseitigen Wärmepumpe und der mindestens einen Erdwärmequelle in Reihe geschaltet, wobei, wie bereits ausgeführt, bevorzugt die Luft/Flüssigkeit-Wärmetauschereinheit erst die von der gebäudeseitigen Wärmepumpe kommende kalte Flüssigkeit erwärmt, bevor sie der mindestens einen Erdwärmequelle zugeführt wird. Die in der Luft/Flüssigkeit-Wärmetauschereinheit integrierte Steuer- und Regeleinheit steuert und regelt eigenständig die betreffenden Stellglieder. Die Regel- und Steuereinheit regelt für die jeweiligen Modi mindestens das mindestens eine Umschaltventil und die Umwälzpumpe in Abhängigkeit der vorstehend genannten vorgebbaren Parameter.

Des Weiteren ist zweckmäßigerweise mindestens eine Lüftereinrichtung für den Lufttransport durch das Gehäuse vorgesehen, die ebenfalls entsprechend der vorgebbaren Parameter von der Regel- und Steuereinheit gesteuert wird.

Bei der erfindungsgemäß ausgestalteten Wärmegewinnungsanlage weist der Luft/Flüssigkeit-Wärmetauscher in der Vorlauf- oder Rücklaufleitung eine über ein Dreiwegeventil in die Rücklaufleitung schaltbare Umwälzpumpe auf und die Rücklaufleitung ist über ein erstes Umschaltventil an die Rücklaufleitung von der Wärmepumpe zu der mindestens einen Erdwärmequelle angeschlossen. Es ist zu beachten, dass die Rücklaufleitung von der Wärmepumpe gleichzeitig die Vorlaufleitung für die mindestens eine Erdwärmequelle ist. Diese Ausgestaltung ermöglicht den Regenerationsmodus und den Monomodus. Erfindungsgemäß ist zudem die Zuführleitung von der Wärmepumpe über ein zweites Umschaltventil an eine Kurzschlussleitung zwischen der Rücklaufleitung von der Wärmepumpe und der Rücklaufleitung von der mindestens einen Erdwärmequelle zu der Wärmepumpe angeschlossen. Die Kurzschlussleitung ist dabei von der Wärmepumpe in Flussrichtung vor dem ersten Umschaltventil angeordnet. Ferner ist eine Steuer- und Regeleinrichtung vorgesehen, die die Ventile entsprechend der einzelnen Betriebsmodi schaltet. Die Steuer- und Regeleinrichtung kann grundsätzlich an der gebäudeseitigen Wärmepumpe oder auch extern im Bereich des Luft/Flüssigkeit-Wärmetauschers angeordnet sein.

Vorzugsweise schaltet die Steuer- und Regeleinrichtung im Ergänzungsmodus das erste Umschaltventil und das zweite Umschaltventil derart, dass der Luft/Flüssigkeit-Wärmetauscher in Reihe im Vorlauf von der Wärmepumpe zu der mindestens einen Erdwärmequelle angeordnet ist. Damit wird die Flüssigkeit zu der mindestens einen Erdwärmequelle vorher über den Luft/Flüssigkeit-Wärmetauscher geführt.

Gemäß einer weiteren Ausbildung schaltet die Steuer- und Regeleinrichtung im Regenerationsmodus die Umwälzpumpe über das Dreiwegeventil in den Flüssigkeitskreislauf und das erste und zweite Umschaltventil derart, dass der Rücklauf von der mindestens einen Erdwärmequelle an die Vorlaufleitung zum Luft/Flüssigkeit-Wärmetauscher und der Vorlauf zu der mindestens einen Erdwärmequelle von der Rücklaufleitung vom Luft/Flüssigkeit-Wärmetauscher gespeist wird.

In einer weiteren Ausbildung der Erfindung trennt die Steuer- Und Regeleinheit im Monomodus über das erste und zweite Umschaltventil den Luft/Flüssigkeit-Wärmetauscher von dem Vorlauf von der Wärmepumpe zu der mindestens einen Erdwärmequelle und der Kurzschlussleitung, so dass ein Kreislauf ausschließlich zwischen Wärmepumpe und der mindestens einen Erdwärmequelle entsteht.

Gemäß einer besonders bevorzugten Ausbildung der Wärmegewinnungsanlage ist eine Luft/Flüssigkeit-Wärmetauschereinheit vorgesehen, bei der in einem Gehäuse der Luft/Flüssigkeit-Wärmetauscher, die Vorlauf- und Rücklaufleitung zu dem Luft/Flüssigkeit-Wärmetauscher, die Umwälzpumpe mit Ventil sowie die Steuer- und Regeleinrichtung integriert sind. Damit kann die Wärmegewinnungsanlage mittels eines eigenständigen Moduls, das die gesamte Steuerung für die verschiedenen Betriebsmodi übernimmt und lediglich Daten von der gebäudeseitigen Wärmepumpe für die Regelung empfängt realisiert werden. Der Anschluss dieser Luft/Flüssigkeit-Wärmetauschereinheit an das bereits bestehende Leitungssystem mit Einbau von mindestens einem Umschaltventil, vorzugsweise zwei Umschaltventilen und Einbindung der Kurzschlussleitung ermöglicht auf relativ einfache Art und Weise die nachträgliche Aufwertung einer bereits bestehenden Erdwärmeheizanlage. Aufgrund der Erfindung ist bei der Konzeption von Neuanlagen eine geringere Anzahl von Sonden, insbesondere Tiefensonden erforderlich, oder sogar eine Anlage ohne genehmigungspflichtige Tiefensonden mit ausreichendem Wirkungsgrad realisiert werden kann. Auch bestehende Anlagen, die aufgrund von bereits aus dem Erdreich entzogener Wärme hinsichtlich des Betriebs unwirtschaftlich geworden sind, können dadurch wieder wirtschaftlich mit ausreichendem Wirkungsgrad betrieben werden.

Zusammenfassend ist festzustellen, dass durch die Erfindung erhebliche Vorteile entstehen, da bestehende unwirtschaftliche Erdwärmeheizanlagen wieder wirtschaftlich werden, im Sommer vorhandene Energie für den Winter im Erdreich gespeichert werden kann, der Bau von neuen Erdwärmeheizanlagen wesentlich wirtschaftlicher wird, weil auf genehmigungspflichtige Tiefensonden verzichtet werden kann und insgesamt Erdwärmeheizanlagen deutlich wirtschaftlicher als bisher betreibbar sind.

Nachfolgend wird die Erfindung anhand von Ausführungsbeispielen näher erläutert, wobei in den Ansprüchen sowie der Beschreibung aufgeführte Merkmale einzeln oder auch in Kombination möglich sind. Weitere Vorteile, Merkmale und Einzelheiten der Erfindung ergeben sich aus den Ansprüchen, der nachfolgenden Beschreibung bevorzugter Ausführungsformen sowie anhand der Zeichnungen, in welchen gleiche oder funktionsgleiche Elemente mit identischen Bezugszeichen versehen sind.

Es stellen dar:
- Figur 1: eine Luft/Flüssigkeit-Wärmetauschereinheit mit einem Plattenwärmetauscher in einer schematischen blockbildähnlichen Darstellung;
- Figur 2: ein Leitungsschaltbild für den ausschließlichen Regenerationsmodus ohne die Möglichkeit eines Ergänzungsmodus;
- Figur 3: ein Leitungsschaltbild für den Regenerationsmodus mit der Möglichkeit des Ergänzungsmodus;
- Figur 4: ein Leitschaltbild für den Ergänzungsmodus; und
- Figur 5: eine Leitungsschaltungsanordnung für den Monomodus bei einer Leitungsanordnung gemäß der Figuren 3 und 4.

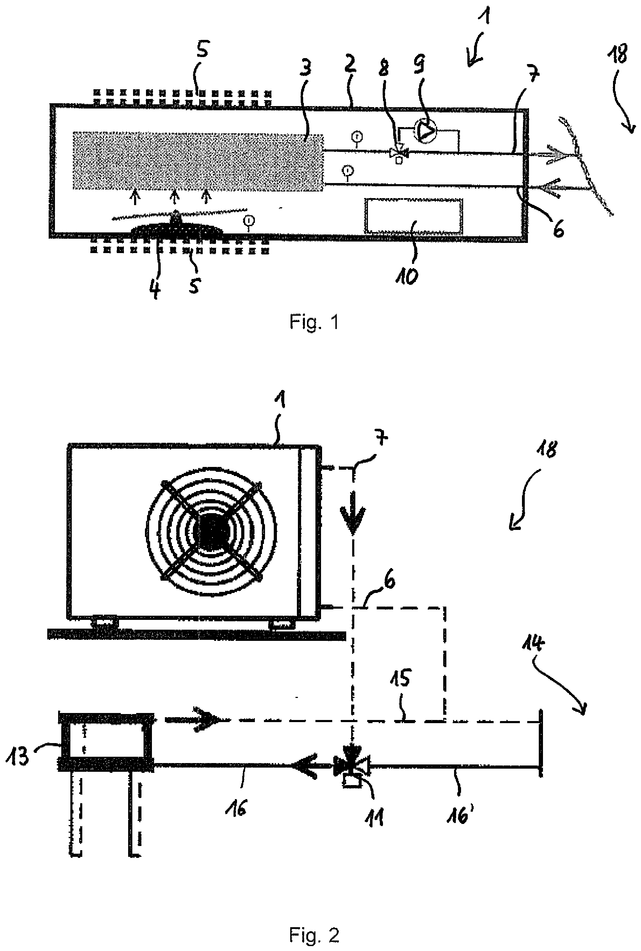

In der Figur 1 ist schematisch eine Luft/Flüssigkeit-Wärmetauschereinheit 1 mit einem Gehäuse 2, das Lüftungsöffnungen 5 im Bereich eines im Inneren angeordneten Lüfters 4 und eines Luft/Flüssigkeit-Wärmetauschers 3 dargestellt. Der Wärmetauscher 3 ist über eine Vorlaufleitung 6 und einer Rücklaufleitung 7 an ein äußeres Leitungsnetz anschließbar. Im Inneren des Gehäuses 2 befindet sich eine Regel- und Steuereinrichtung sowie in diesem Ausführungsbeispiel der Rücklaufleitung 7 ein Dreiwegeventil 8 über das eine Umwälzpumpe 9 in die Rücklaufleitung schaltbar ist.

Figur 2 zeigt schematisch die Luft/Flüssigkeit-Wärmetauschereinheit 1 deren Vorlaufleitung 6 und Rücklaufleitung 7 an einen Erdwärmeheizkreislauf mit einer nicht dargestellten jedoch mit Pfeil 14 angedeuteten gebäudeseitigen Flüssigkeit/Wasser-Wärmepumpe und schematisch angedeuteten Erdwärmequellen 13 verbunden ist. Unter Erdwärmequellen werden in diesem Zusammenhang Tiefensonden, Erdwärmekörbe oder Flächenkollektoren verstanden, die je nach Ausführungsart einfach oder üblicherweise mehrfach im Erdreich angeordnet sind. Die Vorlaufleitung 6 ist an die von der Erdwärmequelle 13 kommende Rücklaufleitung 15 zur Wärmepumpe 14 und die Rücklaufleitung 7 über ein Dreiwege-Umschaltventil 11 mit der Vorlaufleitung 16 zu der Erdwärmequelle 13, die vor dem 3 Wege-Umschaltventil 11 als Rücklaufleitung 16' von der Wärmepumpe 14 bezeichnet ist, verbunden. Bei der Wärmepumpe 14 handelt es sich um eine bei derartigen Anlagen übliche Wärmepumpe, bei der im Kreislauf ein Verdichter, ein Verflüssiger, ein Drosselorgan und ein Verdampfer angeordnet sind, und primärseitig Wärme zugeführt und sekundärseitig Wärme als Brauchwasser und/oder Heizwasser abgeführt wird. In der in Figur 1 dargestellten Leitungsschaltung und Stellung des Umschaltventils 11 ist die Wärmepumpe 14 .strömungstechnisch von der Erdwärmequelle 13 getrennt. Im Inneren der Luft/Flüssigkeit-Wärmetauschereinheit 1 ist die Umwälzpumpe 9 über das Dreiwegeventil 8 in die Rücklaufleitung 7 geschaltet und fördert damit die in den Leitungen 6, 7, 15, 16 befindliche Flüssigkeit. Bei dieser Flüssigkeit handelt es sich um ein gängiges Wärmeübertragungsmittel, wie es bei den üblichen Anlagen verwendet werden kann, beispielsweise ein Glykol-Wassergemisch, Wasser mit Salz, Wasser mit Alkohol oder dergleichen. Aufgrund der Stellung der Ventile 8 und 11 handelt es sich in dieser Figur um den Regenerationsmodus, bei dem die Erdwärmequelle 13 mit von der Luft/Flüssigkeit-Wärmetauschereinheit 1 gewonnene Wärme versorgt wird. Wenn aufgrund der klimatischen Bedingungen oder eine Bedarfsanfrage im Gebäude der Regenerationsmodus abgeschaltet werden muss, wird die Rücklaufleitung 7 über das Umschaltventil 11 von der Vorlaufleitung 16 strömungstechnisch getrennt und gleichzeitig durch Umschalten des Dreiwegeventils 8 die Umwälzpumpe von der Rücklaufleitung 7 getrennt und abgeschaltet.

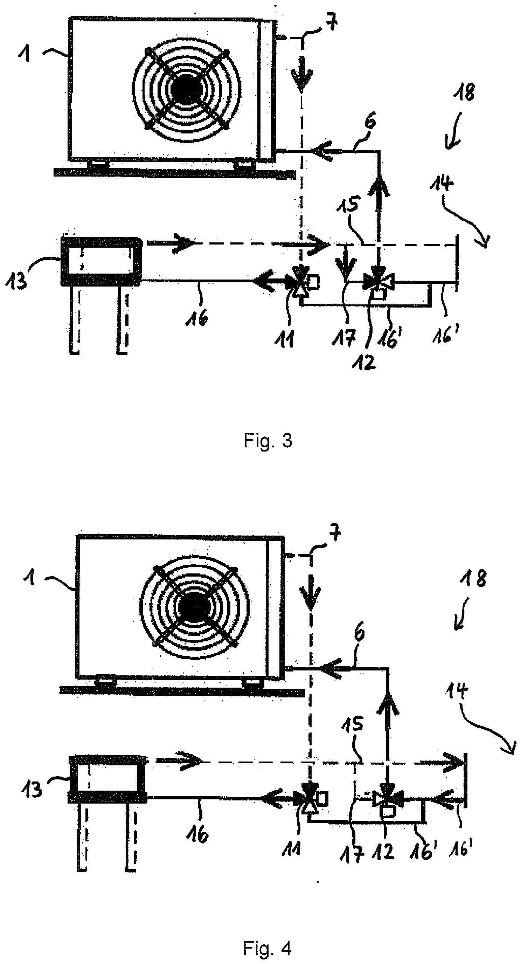

Figur 3 zeigt die Luft/Flüssigkeit-Wärmetauschereinheit 1 ebenfalls im Regenerationsbetrieb wie in Figur 2, jedoch mit einer geänderten Vorlaufleitung 16 zu der Erdwärmequelle 13 bzw. Rücklaufleitung 16' von der Wärmepumpe 14, um mit dieser Leitungsführung auch einen weiteren, in Verbindung mit Figur 4 beschriebenen Ergänzungsmodus zu ermöglichen. In Figur 3 ist auch die Vorlaufleitung 6 über ein weiteres Umschaltventil 12 mit der Rücklaufleitung 16' verbunden, wobei jedoch die Abgangsseite der Rücklaufleitung 16' über eine Kurzschlussleitung 17 mit der Rücklaufleitung 15 von der Erdwärmequelle 13 verbunden ist. Das Umschaltventil 11 ist weiterhin in der Vorlaufleitung 16 bzw. Rücklaufleitung 16' angeordnet. Auch in diesem Regenerationsmodus ist die Umwälzpumpe 9 und die Rücklaufleitung 7 geschaltet. Wie in der Figur 2 ist auch hier die Wärmepumpe 14 von dem Wärmekreis getrennt, was hier jedoch durch die beiden Ventile 11 und 12 bewerkstelligt wird. Ansonsten genauso wie in Figur 2 findet eine Regeneration der Erdwärmequelle 13 dadurch statt, dass die warme Flüssigkeit der Rücklaufleitung 7 in die Vorlaufleitung 16 zu der Erdwärmequelle 13 geführt ist. Von der Erdwärmequelle 13 gelangt die Flüssigkeit über das Umschaltventil 12 zur Vorlaufleitung 6.

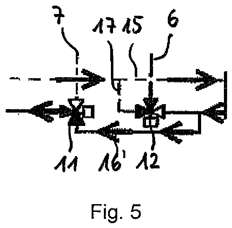

Figur 4 zeigt eine Darstellung entsprechend Figur 3 im Ergänzungsmodus, bei dem die Umwälzpumpe 9 abgeschaltet ist und durch das Dreiwegeventil 8 sich nicht mehr in der Rücklaufleitung 7 befindet. Die von der Wärmepumpe 14 kommende kalte Vorlaufflüssigkeit für die Erdwärmequelle 16 in der Rücklaufleitung 16' fliest über das Umschaltventil 12 zur Vorlaufleitung 6, wird in der Luft/Flüssigkeit-Wärmetauschereinheit 1 erwärmt und fließt über die Rücklaufleitung 7, das Umschaltventil 11 zu der Erdwärmequelle 13. Die Flüssigkeit aus der Erdwärmequelle 13 fließt dann über die Rücklaufleitung 15 zu der Wärmepumpe 14. Bei diesem Betrieb wird die aus der Erdwärmequelle 13 kommende Flüssigkeit in der Temperatur angehoben, so dass die Wärmepumpe 14 in einem besseren Arbeitsbereich arbeiten kann als ohne die zusätzliche Luft/Flüssigkeit-Wärmetauschereinheit 1. Bei der in Figur 4 gezeigten Anordnung gelangt die von der Wärmepumpe 14 kommende Flüssigkeit zuerst über die Luft/Flüssigkeit-Wärmetauschereinheit 1 zu der Erdwärmequelle 13 und dann zurück zu der Wärmepumpe 14. Genauso ist es möglich, dass aufgrund von bestimmten vorgegebenen Situationen die von der Wärmepumpe 14 kommende kalte Flüssigkeit erst über die Erdwärmequelle 13 und dann über die Luft/Flüssigkeit-Wärmetauschereinheit 1 zurück zu der Wärmepumpe 14 geführt wird. In diesem Fall sind die Pfeilrichtungen in Figur 4 und auch Figur 5 umgekehrt.

Sofern die Umgebungstemperatur so niedrig ist, dass die Luft/Flüssigkeit-Wärmetauschereinheit 1 keinen Beitrag mehr zur Erhöhung der aus der Erdwärmequelle 13 kommenden Flüssigkeit leisten kann, wird diese über das Dreiwege-Umschaltventil 11 von der Vorlaufleitung 16 gemäß Figur 5 getrennt. In allen Figuren sind die Flussrichtungen durch Pfeile kenntlich gemacht.

Technisch bedingt kann in der Praxis, je nach Anforderung und Aufgabenstellung das gesamte Hydraulikprinzip bei den einzelnen Betriebsmodi auch umgekehrt werden. Die Luft/Flüssigkeit-Wärmetauschereinheit 1 kann entweder den Vorlauf oder den Rücklauf bedienen. Die Wirkungsweise der Luft/Flüssigkeit-Wärmetauschereinheit 1 bleibt davon unberührt.

Die übliche maximale Temperatur aus einer Erdwärmequelle beträgt ca. 4°C. Auf diese Temperatur ist die gebäudeseitige Wärmepumpe ausgelegt. Der Wirkungsgrad dieser Wärmepumpe 14 steigt erheblich, wenn die Temperatur größer 4°C sein sollte. Dies kann dadurch erreicht werden, dass entweder in dem in Figur 4 dargestellten Ergänzungsmodus aufgrund entsprechender Umgebungstemperatur die von der Luft/Flüssigkeit-Wärmetauschereinheit gewonnene Wärme hinzugefügt wird. Für den Fall, dass aufgrund eines vorangegangenen Betriebes die Erdwärmequelle 13 nicht die Maximaltemperatur von 4°C bringen würde, bewirkt die Luft/Flüssigkeit-Wärmetauschereinheit 1 eine Erwärmung des Erdreiches und je nach momentanen Temperaturverhältnissen auch eine Erhöhung der außer Erdwärmequelle 13 kommenden Flüssigkeit. Sinkt die Umgebungstemperatur ab, so dass die Luft/Flüssigkeit-Wärmetauschereinheit 1 keinen Beitrag liefert und gemäß Figur 5 von der Vorlaufleitung 16 getrennt wird, so kann durch die vorangegangene Erwärmung im Ergänzungsmodus oder auch im Regenerationsmodus eine höhere Temperatur von der Erdwärmequelle 13 geliefert werden.

## Patentansprüche

1. Betriebsverfahren für Wärmegewinnungsanlagen, die in einem Flüssigkeitskreislauf mindestens eine Erdwärmequelle (13), eine Wärmepumpe (14) und zusätzlich eine Luft/Flüssigkeit-Wärmetauschereinheit (1) mit mindestens einem Luft/Flüssigkeit-Wärmetauscher (3) aufweisen, **dadurch gekennzeichnet, dass** der mindestens eine Luft/Flüssigkeit-Wärmetauscher (3) wahlweise in einem Ergänzungsmodus oder in einem Regenerationsmodus in dem Flüssigkeitskreislauf betrieben wird, wobei in dem Ergänzungsmodus der Luft/Flüssigkeit-Wärmetauscher (3) in Reihe mit der Wärmepumpe (14) und der mindestens einen Erdwärmequelle (13) geschaltet wird und in dem Regenerationsmodus die Wärmepumpe (14) von dem Flüssigkeitskreislauf getrennt und der Luft/Flüssigkeit-Wärmetauscher (3) mit der mindestens einen Erdwärmequelle (13) verbunden wird.

2. Betriebsverfahren nach Anspruch 1, **dadurch gekennzeichnet, dass** im Ergänzungsmodus die Flüssigkeit von der Wärmepumpe (14) kommend über den Luft/Flüssigkeit-Wärmetauscher (3) und die mindestens eine Erdwärmequelle (13) zurück zur Wärmepumpe (14) geführt wird.

3. Betriebsverfahren nach Anspruch 1 oder 2, **dadurch gekennzeichnet, dass** im Regenerationsmodus bei vom Kreislauf getrennter Wärmepumpe (14) die Flüssigkeit vom Luft/Flüssigkeit-Wärmetauscher (3) über die mindestens eine Erdwärmequelle (13) zurück zum Luft/Flüssigkeit-Wärmetauscher (3) geführt wird.

4. Betriebsverfahren nach einem der vorangegangenen Ansprüche, **dadurch gekennzeichnet, dass** in einem Monomodus bei unterschreiten eines vorgegebenen unteren Grenzwertes für die Außenluft am Luft/Flüssigkeit-Wärmetauscher (3) die Flüssigkeit von der Wärmepumpe (14) direkt über die mindestens eine Erdwärmequelle (13) zurück zur Wärmepumpe (14) geführt wird.

5. Luft/Flüssigkeit-Wärmetauschereinheit zur Verwendung bei dem Verfahren nach einem der Ansprüche 1 bis 4 in Verbindung mit einer Erdwärmequelle (13) und einer Wärmepumpe (14), mit mindestens einem Luft/Flüssigkeit-Wärmetauscher (3), der in einem Gehäuse (2) mit Be- und Entlüftungsöffnungen (5) angeordnet ist, sowie mit mindestens einer Vorlauf- und einer Rücklaufleitung (6, 7), die mit dem Luft/Flüssigkeit-Wärmetauscher (3) verbunden sind, **gekennzeichnet durch** eine in der mindestens einen Vorlauf- oder Rücklaufleitung (6, 7) über ein Dreiwegeventil (8) in die Rücklaufleitung (7) schaltbare Umwälzpumpe (9) und einer Regel- und Steuereinrichtung (10) mindestens zum Steuern des Dreiwegeventils (8) in Abhängigkeit vom Ergänzungs- oder Regenerationsmodus und durch mindestens ein Umschaltventil (11, 12), das die Rücklaufleitung (7) oder die Vorlaufleitung (6) mit einer Leitung (16) von der Wärmepumpe (14) zu der mindestens einen Erdwärmequelle (13) verbindet, wobei die Regel- und Steuereinheit (10) dazu eingerichtet ist, für die jeweiligen Modi das Dreiwegeventil (8) und das mindestens eine Umschaltventil (11, 12) sowie die Umwälzpumpe (9) in Abhängigkeit von vorgebaren Parametern zu steuern.

6. Luft/Flüssigkeit-Wärmetauschereinheit nach Anspruch 5, **dadurch gekennzeichnet, dass** eine Lüftereinrichtung (4) für den Lufttransport durch das Gehäuse (2) vorgesehen ist.

7. Wärmegewinnungsanlage (18) zur Durchführung des Verfahrens nach einem der Ansprüche 1 bis 4, mit einer Erdwärmequelle (13), einer Wärmepumpe (14) und einer Luft/Flüssigkeit-Wärmetauschereinheit (1) nach Anspruch 5, **dadurch gekennzeichnet, dass** der mit einer Vorlauf- oder Rücklaufleitung (6, 7) versehene Luft/Flüssigkeit-Wärmetauscher (3) der Luft/Flüssigkeit-Wärmetauschereinheit (1) eine über ein Dreiwegeventil (8) in die Rücklaufleitung (7) schaltbare Umwälzpumpe (9) aufweist, die Rücklaufleitung (7) oder die Vorlaufleitung (6) über ein erstes Umschaltventil (11) an eine von der Wärmepumpe (14) kommende Rücklaufleitung (16') angeschlossen ist, und die Wärmegewinnungsanlage eine Steuer- und Regeleinrichtung (10) aufweist, die dazu eingerichtet ist, die Ventile (8, 11, 12) entsprechend der einzelnen Betriebsmodi zu schalten, und dass die Rücklaufleitung (16') von der Wärmepumpe (14) über ein zweites Umschaltventil (12) an eine Kurzschlussleitung (17) zwischen der Rücklaufleitung (16') von der Wärmepumpe (14) zu der mindestens einen Erdwärmequelle (13) und der Rücklaufleitung (15) von der mindestens einen Erdwärmequelle (13) zu der Wärmepumpe (14) angeschlossen ist, wobei die Kurzschlussleitung (17) von der Wärmepumpe (14) in Flussrichtung vor dem ersten Umschaltventil (11) angeordnet ist.

8. Wärmegewinnungsanlage (18) nach Anspruch 7, **dadurch gekennzeichnet, dass** die Steuer- und Regeleinrichtung (10) im Ergänzungsmodus das erste Umschaltventil (11) und das zweite Umschaltventil (12) derart schaltet, dass der Luft/Flüssigkeit-Wärmetauscher (3) in Reihe mit der Wärmepumpe (14) und der mindestens einen Erdwärmequelle (13) angeordnet ist.

9. Wärmegewinnungsanlage nach Anspruch 7, **dadurch gekennzeichnet, dass** die Steuer- und Regeleinrichtung (10) im Regenerationsmodus die Umwälzpumpe (9) über das Dreiwegeventil (8) in den Kreislauf und das erste und zweite Umschaltventil (11, 12) derart schaltet, dass der Rücklauf von der mindestens einen Erdwärmequelle (13) an die Vorlaufleitung (6) zum Luft/Flüssigkeit-Wärmetauscher (3) und der Vorlauf zu der mindestens einen Erdwärmequelle (13) von der Rücklaufleitung (7) von dem Luft/Flüssigkeit-Wärmetauscher (3) angeschlossen ist.

10. Wärmegewinnungsanlage nach einem der vorangegangenen Ansprüche 7 bis 9, **dadurch gekennzeichnet, dass** die Steuer- und Regeleinheit (10) im Monomodus über das erste und zweite Steuerventil (11, 12) den Luft/Flüssigkeit-Wärmetauscher (3) von der Rücklaufleitung (16') von der Wärmepumpe (14) zu der mindestens einen Erdwärmequelle (13) und der Kurzschlussleitung (17) trennt, so dass ein Kreislauf ausschließlich zwischen der Wärmepumpe (14) und der mindestens einen Erdwärmequelle (13) entsteht.

11. Wärmegewinnungsanlage (18) nach einem der vorangegangenen Ansprüche 7 bis 10, **dadurch gekennzeichnet, dass** in einer Luft/Flüssigkeit-Wärmetauschereinheit (1) in einem Gehäuse (2) der Luft/Flüssigkeit-Wärmetauscher (3), die Umwälzpumpe (9) mit Dreiwegeventil (8) sowie die Steuer- und Regeleinrichtung (10) integriert sind.

## Claims

1. Operating method for heat generating systems which have, in a liquid circuit, at least one geothermal heat source (13), a heat pump (14) and additionally an air/liquid heat exchanger unit (1) comprising at least one air/liquid heat exchanger (3), **characterised in that** the at least one air/liquid heat exchanger (3) is operated in the liquid circuit either in a supplementary mode or in a regeneration mode, the air/liquid heat exchanger (3) being connected in series with the heat pump (14) and the at least one geothermal heat source (13) in the supplementary mode, and the heat pump (14) being separated from the liquid circuit and the air/liquid heat exchanger (3) being connected to the at least one geothermal heat source (13) in the regeneration mode.

2. Operating method according to claim 1, **characterised in that**, in the supplementary mode, the liquid coming from the heat pump (14) is carried back to the heat pump (14) via the air/liquid heat exchanger (3) and the at least one geothermal heat source (13).

3. Operating method according to either claim 1 or claim 2, **characterised in that**, in the regeneration mode, with the heat pump (14) separated from the circuit, the liquid from the air/liquid heat exchanger (3) is carried back to the air/liquid heat exchanger (3) via the at least one geothermal heat source (13).

4. Operating method according to any of the preceding claims, **characterised in that**, in a mono mode, when the outside air at the air/liquid heat exchanger (3) falls below a preset lower limit value, the liquid from the heat pump (14) is carried directly back to the heat pump (14) via the at least one geothermal heat source (13).

5. Air/liquid heat exchanger unit for use in the method according to any of claims 1 to 4 in connection with a geothermal heat source (13) and a heat pump (14), comprising at least one air/liquid heat exchanger (3), which is arranged in a housing (2) comprising air supply and removal openings (5), and comprising at least one feed line and one return line (6, 7) which are connected to the air/liquid heat exchanger (3), **characterised by** a circulation pump (9) which can be connected into the return line (7) by means of a three-way valve (8) in the at least one feed or return line (6, 7) and a regulating and control device (10) at least for controlling the three-way valve (8) according to the supplementary or regeneration mode and by means of at least one switching valve (11, 12) which connects the return line (7) or the feed line (6) to a line (16) from the heat pump (14) to the at least one geothermal heat source (13), the regulating and control unit (10) being designed to control the three-way valve (8), the at least one switching valve (11, 12) and the circulation pump (9) for the respective modes according to parameters that can be preset.

6. Air/liquid heat exchanger unit according to claim 5, **characterised in that** a ventilation device (4) is provided for transporting air through the housing (2).

7. Heat generating system (18) for carrying out the method according to any of claims 1 to 4, comprising a geothermal heat source (13), a heat pump (14) and an air/liquid heat exchanger unit (1) according to claim 5, **characterised in that** the air/liquid heat exchanger (3) of the air/liquid heat exchanger unit (1), which exchanger is provided with a feed or return line (6, 7), has a circulation pump (9) which can be connected into the return line (7) by means of a three-way valve (8), the return line (7) or the feed line (6) is connected, by means of a first switching valve (11), to a return line (16') coming from the heat pump (14), and the heat generating system has a control and regulating device (10) which is designed to operate the valves (8, 11, 12) according to the individual operating modes, and **in that** the return line (16') from the heat pump (14) is connected, by means of a second switching valve (12), to a short-circuit line (17) between the return line (16') from the heat pump (14) to the at least one geothermal heat source (13) and the return line (15) from the at least one geothermal heat source (13) to the heat pump (14), the short-circuit line (17) from the heat pump (14) being arranged upstream of the first switching valve (11) in the flow direction.

8. Heat generating system (18) according to claim 7, **characterised in that** the control and regulating device (10) operates the first switching valve (11) and the second switching valve (12) in the supplementary mode such that the air/liquid heat exchanger (3) is arranged in series with the heat pump (14) and the at least one geothermal heat source (13).

9. Heat generating system according to claim 7, **characterised in that**, in the regeneration mode, the control and regulating device (10) connects the circulation pump (9) into the circuit by means of the three-way valve (8) and operates the first and second switching valve (11, 12) such that the return line from the at least one geothermal heat source (13) is connected to the feed line (6) to the air/liquid heat exchanger (3) and the feed line to the at least one geothermal heat source (13) from the return flow line (7) from the air/liquid heat exchanger (3).

10. Heat generating system according to any of the preceding claims 7 to 9, **characterised in that**, in the mono mode, by means of the first and second control valve (11, 12), the control and regulating unit (10) separates the air/liquid heat exchanger (3) from the return line (16') from the heat pump (14) to the at least one geothermal heat source (13) and the short-circuit line (17) such that a circuit is established exclusively between the heat pump (14) and the at least one geothermal heat source (13).

11. Heat generating system (18) according to any of the preceding claims 7 to 10, **characterised in that**, in an air/liquid heat exchanger unit (1), the air/liquid heat exchanger (3), the circulation pump (9) comprising the three-way valve (8) and the control and regulating device (10) are integrated in a housing (2).

## Revendications

1. Procédé d'exploitation destiné à des installations de récupération de chaleur comprenant, dans un circuit de fluide, au moins une source (13) d'énergie géothermique, une pompe à chaleur (14) et, additionnellement, une unité (1) d'échange de chaleur air/fluide munie d'au moins un échangeur (3) de chaleur air/fluide, **caractérisé par le fait que** l'échangeur (3) de chaleur air/fluide, à présence minimale, est exploité sélectivement en un mode complémentaire ou en un mode régénératif dans le circuit de fluide, sachant que, dans le mode complémentaire, l'échangeur (3) de chaleur air/fluide est branché en série avec la pompe à chaleur (14) et avec la source (13) d'énergie géothermique à présence minimale et que, dans le mode régénératif, ladite pompe à chaleur (14) est séparée d'avec le circuit de fluide et ledit échangeur (3) de chaleur air/fluide est raccordé à ladite source (13) d'énergie géothermique, à présence minimale.

2. Procédé d'exploitation selon la revendication 1, **caractérisé par le fait que**, dans le mode complémentaire, le fluide en provenance de la pompe à chaleur (14) est renvoyé à ladite pompe à chaleur (14) par l'intermédiaire de l'échangeur (3) de chaleur air/fluide et de la source (13) d'énergie géothermique, à présence minimale.

3. Procédé d'exploitation selon la revendication 1 ou 2, **caractérisé par le fait que** dans le mode régénératif, lorsque la pompe à chaleur (14) est séparée d'avec le circuit, le fluide émanant de l'échangeur (3) de chaleur air/fluide est renvoyé audit échangeur (3) de chaleur air/fluide par l'intermédiaire de la source (13) d'énergie géothermique, à présence minimale.

4. Procédé d'exploitation selon l'une des revendications précédentes, **caractérisé par le fait que** dans un mode mono, en cas de dépassement négatif d'une valeur limite inférieure préétablie concernant l'air extérieur au niveau de l'échangeur (3) de chaleur air/fluide, le fluide émanant de la pompe à chaleur (14) est renvoyé directement à ladite pompe à chaleur (14) par l'intermédiaire de la source (13) d'énergie géothermique, à présence minimale.

5. Unité d'échange de chaleur air/fluide conçue pour être utilisée dans le procédé conforme à l'une des revendications 1 à 4, en association avec une source (13) d'énergie géothermique et avec une pompe à chaleur (14), comprenant au moins un échangeur (3) de chaleur air/fluide, logé dans un carter (2) percé d'orifices (5) d'aération et de ventilation, ainsi qu'un moins des conduits d'arrivée et de retour (6, 7) raccordés audit échangeur (3) de chaleur air/fluide, **caractérisée par** une pompe (9) de mise en circulation qui peut être commutée sur le conduit de retour (7) par l'intermédiaire d'une vanne trois voies (8), dans le conduit d'arrivée ou de retour (6, 7) à présence minimale, et un dispositif (10) de régulation et de commande, au moins affecté à la commande de ladite vanne trois voies (8) en fonction du mode complémentaire ou régénératif, et par au moins une vanne de commutation (11, 12) reliant ledit conduit de retour (7) ou ledit conduit d'arrivée (6) à un conduit (16) partant de la pompe à chaleur (14) et gagnant la source (13) d'énergie géothermique, à présence minimale, l'unité (10) de régulation et de commande étant agencée en vue de commander ladite vanne trois voies (8) et ladite vanne de commutation (11, 12) à présence minimale, ainsi que ladite pompe (9) de mise en circulation, pour les modes respectifs, en fonction de paramètres pouvant être préétablis.

6. Unité d'échange de chaleur air/fluide selon la revendication 5, **caractérisée par le fait qu'**un dispositif de ventilation (4) est prévu pour acheminer l'air à travers le carter (2).

7. Installation (18) de récupération de chaleur dévolue à la mise en œuvre du procédé conforme à l'une des revendications 1 à 4, comprenant une source (13) d'énergie géothermique, une pompe à chaleur (14) et une unité (1) d'échange de chaleur air/fluide conforme à la revendication 5, **caractérisée par le fait que** l'échangeur (3) de chaleur air/fluide de l'unité (1) d'échange de chaleur air/fluide, muni d'un conduit d'arrivée ou de retour (6, 7), est pourvu d'une pompe (9) de mise en circulation qui peut être commutée sur le conduit de retour (7) par l'intermédiaire d'une vanne trois voies (8), le conduit de retour (7) ou le conduit d'arrivée (6) étant raccordé, par l'intermédiaire d'une première vanne de commutation (11), à un conduit de retour (16') provenant de la pompe à chaleur (14), et ladite installation de récupération de chaleur étant dotée d'un dispositif (10) de commande et de régulation, agencé pour activer les vannes (8, 11, 12) en concordance avec les modes d'exploitation individuels ; et **par le fait que** ledit conduit de retour (16') provenant de la pompe à chaleur (14) est raccordé, par l'intermédiaire d'une seconde vanne de commutation (12), à un conduit de court-circuitage (17) entre ledit conduit de retour (16') provenant de ladite pompe à chaleur (14) et gagnant la source (13) d'énergie géothermique, à présence minimale, et le conduit de retour (15) qui part de ladite source (13) d'énergie géothermique, à présence minimale, et gagne ladite pompe à chaleur (14), lequel conduit de court-circuitage (17), provenant de ladite pompe à chaleur (14), est implanté avant ladite première vanne de commutation (11) dans la direction de l'écoulement.

8. Installation (18) de récupération de chaleur selon la revendication 7, **caractérisée par le fait que**, dans le mode complémentaire, le dispositif (10) de commande et de régulation active la première vanne de commutation (11) et la seconde vanne de commutation (12) de façon telle que l'échangeur (3) de chaleur air/fluide soit agencé en série avec la pompe à chaleur (14) et avec la source (13) d'énergie géothermique, à présence minimale.

9. Installation (18) de récupération de chaleur selon la revendication 7, **caractérisée par le fait que**, dans le mode régénératif, le dispositif (10) de commande et de régulation commute la pompe (9) de mise en circulation sur le circuit, par l'intermédiaire de la vanne trois voies (8), et active les première et seconde vannes de commutation (11, 12) d'une manière propre à instaurer un raccordement du flux de retour provenant de la source (13) d'énergie géothermique, à présence minimale, avec le conduit d'arrivée (6) gagnant l'échangeur (3) de chaleur air/fluide, et du flux d'arrivée avec ladite source (13) d'énergie géothermique, à présence minimale, à partir du conduit de retour (7) provenant dudit échangeur (3) de chaleur air/fluide.

10. Installation (18) de récupération de chaleur selon l'une des revendications 7 à 9 précédentes, **caractérisée par le fait que**, dans le mode mono, l'unité (10) de commande et de régulation sépare l'échangeur (3) de chaleur air/fluide d'avec le conduit de retour (16') provenant de la pompe à chaleur (14) et gagnant la source (13) d'énergie géothermique, à présence minimale, et d'avec le conduit de court-circuitage (17), par l'intermédiaire des première et seconde vannes de commande (11, 12), de telle sorte qu'un circuit soit instauré exclusivement entre ladite pompe à chaleur (14) et ladite source (13) d'énergie géothermique, à présence minimale.

11. Installation (18) de récupération de chaleur selon l'une des revendications 7 à 10 précédentes, **caractérisée par le fait que** l'échangeur (3) de chaleur air/fluide, la pompe (9) de mise en circulation associée à la vanne trois voies (8), ainsi que le dispositif (10) de commande et de régulation, sont intégrés dans un carter (2) dans une unité (1) d'échange de chaleur air/fluide.
